# EUROPEAN PATENT APPLICATION

(11) **EP 4 592 745 A1**
(43) Date of publication of application: **30.07.2025**
(21) Application number: 24153666.3
(22) Date of filing: 24.01.2024
(51) Int. Cl.: G02F 1/35, G02F 1/365

(54) **SUPERCONTINUUM GENERATION FROM AN ALL-NORMAL DISPERSION FIBER AND A FREQUENCY-CONVERSION-ELEMENT**

(71) Applicant: NKT Photonics A/S, 3460 Birkerød (DK)
(72) Inventor: CHRISTENSEN, Erik Nicolai, 3460 Birkerød (DK); MONTAGUE, Patrick Bowen, 3460 Birkerød (DK)
(74) Representative: Zacco Denmark A/S

(57) **Abstract**

Disclosed is an all-normal-dispersion (ANDi)-based supercontinuum (SC) system, comprising a pulsed light-source configured to generate a train of light-pulses; an all-normal-dispersion (ANDi)-fiber optically coupled to the pulsed light-source and configured to generate a first supercontinuum-spectrum from the train of light-pulses, wherein the supercontinuum-spectrum is defined in a first frequency-domain; and a frequency-conversion-element configured to convert the supercontinuum-spectrum into a second frequency-domain, whereby the first supercontinuum-spectrum is converted to a second supercontinuum-spectrum.

## Description

### Field of the invention

The present disclosure relates generally to supercontinuum generation in an all-normal dispersion fiber. Specifically, the present disclosure relates to supercontinuum generating in the visible domain. More specifically, the present disclosure relates to generating light in the infrared region and/or ultraviolet region from an all-normal dispersion fiber.

### Background

Generation of a supercontinuum (SC) from an all-normal dispersion (ANDi) fiber is well-known. For example, a supercontinuum that spans from around 750 nm to around 1300 nm, using a pulsed fs-source, and an ANDi-fiber has been demonstrated in the article "All-Fiber-Based All-Normal Dispersion Supercontinuum Source Using a Femtosecond Fiber Laser with Hollow-Core Fiber Pulse Compression", in Advanced Photonics 2018 (BGPP, IPR, NP, NOMA, Sensors, Networks, SPPCom, SOF), OSA Technical Digest (online) (Optica Publishing Group, 2018), by I. B. Gonzalo et al.

Furthermore, a survey of supercontinuum bandwidths in various specialty optical fibers from the ultraviolet to the mid-infrared ranges is shown in the article "Recent Advances in Supercontinuum Generation in Specialty Fiber", in JOSA B 38.12 (2021): F90-F103 by Sylvestre, Thibaut, et al. The article shows that the supercontinuum as generated from an ANDi-fiber typically has been achieved to be in the range from 500 nm and up to around 2000 nm. As described in this article, SC generation in all-normal dispersion (ANDi) fibers develops from self-phase modulation (SPM) and optical wave breaking (OWB) and has been extensively studied. As further described in the article, the broadest possible spectrum is achieved from soliton-based SC, such as from modulation instability, where the fiber has both normal and anomalous dispersion.

Furthermore, the SC spectrum as generated from an ANDi-fiber, using high peak-power femtosecond pulses, leads to pulse-preserved, flat-top, fully coherent SC spectra as also confirmed by numerical simulations. For these reasons, ANDi SC is of particular interest for applications requiring high coherence as well as uniform and smooth spectral and temporal intensity profiles.

Even further, the article describes that by using a high pump power, the combined action of SPM and optical wave breaking (OWB) has been demonstrated to result in a spectrum with superb flatness covering the 670 - 1390 nm range. Accordingly, ANDi SC sources have potential in applications, which so far were not able to use conventional, soliton-based fiber SC sources due to their noise or complex spectra and pulse shapes. An example of an application is spectral-domain OCT for high axial resolution 3D-imaging, where ANDi SC sources led to a paradigm shift as image quality is no longer limited by the SC noise but by detection shot noise. When compared to state-of-the-art commercial systems, ANDI SC-based OCT imaging significantly enhances contrast, sensitivity, penetration, and speed, thus paving the way for improved medical diagnosis, e.g. in the early-stage detection of skin cancer and other skin diseases.

A limitation in ANDi SC sources is clearly the spectral coverage. Nevertheless, as also described in the article by Sylvestre et al., ANDi SC sources have been extended far into the mid-IR to wavelengths up to 14 µm, e.g. using step-index, tapered or all-solid PCF designs.

Details of extension into the mid-IR wavelengths, and further details on ANDi SC generation is described in the book chapter 6, "All-Normal Dispersion Fiber Supercontinuum: Principles, Design, and Applications of a Unique White Light Source", In: Alfano, R.R. (eds) "The Supercontinuum Laser Source", Springer, Cham., by Heidt, A.M., Spangenberg, DM., Rampur, A., Hartung, A., Bartelt, H. (2022).

This book chapter also describes that extension into the deep UV below 350 nm is a long-standing challenge in the SC generation community. The reason for this is that many approaches rely on dispersive wave generation from soliton effects. This requires phase matching with the original soliton, which is difficult to achieve for short wavelengths. However, as also explained in the book chapter by Heidt et al., the generation of short wavelengths in ANDi fibers is extremely fast, and independent of any phase-matching condition, and could therefore be an interesting approach to extend short wavelength edge of fiber-generated SCs deeper into the UV region.

In view of this, a solution to extending the ANDi SC into the UV region is even proposed in the book chapter by Heidt et al., namely by generating a 400 nm wavelength (with peak powers of about 20-50 kW) from a 800 nm Ti-Sapphire laser via frequency doubling, and then use the generated 400 nm wavelength to spectrally broaden within the ANDi-fiber, whereby wavelengths down to 250 nm is expected. However, as described by Heidt et al., although the approach is promising, it has not yet been verified experimentally.

Regardless of the proposal being verified or not, there is clearly a desired need to extend the range of an ANDi SC into the UV. Further, there is a desired need to extend the range of an ANDi SC into the mid-IR using alternative approaches.

### Summary

It is an objective of this disclosure to provide an all-normal dispersion (ANDi)-supercontinuum (SC) source.

Further, it is an objective of this disclosure to provide an ANDi-SC source to provide an ANDi SC, particularly an ANDi-SC that generates UV light or extends into the ultraviolet and/or the infrared domain.

Even further, it is an objective of this disclosure to provide an ANDi-SC source that is more optimal than current solutions to ANDi-SC sources.

These and other objectives have been solved by the all-normal dispersion-based supercontinuum system as defined in the claims and as described below in the present disclosure.

As described in the background section, the general idea of converting one or more of the light pulses into a second train of light-pulses defined by a second frequency-domain and then use this second train of light pulses in an ANDi-fiber to generate and ANDi-SC in the UV-domain was proposed by Heidt et el., but never experimentally verified.

To generate ANDi-SC in the UV-domain, it is likely preferred to use a solid core photonic crystal fiber (PCF), since the dispersion of such a fiber in the UV-domain is flat and has an absolute low value. For this reason, it is also most likely that the solution as proposed by Heidt et al. is with the use of a solid core PCF. If attempted to be experimentally verified, this would work - at least from an academic point of view.

However, if a solid core ANDi-fiber is used together with UV-light, then such a solid core ANDi-fiber could rapidly (within days of operation) be damaged by the exposure to the UV-light, and thus not work in an industrial setting.

There is thus a need for an alternative setup to generate ANDi-SC in the UV-domain.

The present disclosure provides an ANDi-SC source that extends the SC spectrum into the ultraviolet and/or the infrared domain.

In one aspect of the disclosure, there is disclosed an all-normal-dispersion (ANDi)-based supercontinuum (SC) system, comprising:
- a pulsed light-source configured to generate a train of light-pulses;
- an all-normal-dispersion (ANDi)-fiber optically coupled to the pulsed light-source and configured to generate a first supercontinuum-spectrum from the train of light-pulses, wherein the supercontinuum-spectrum is defined in a first frequency-domain; and
- a frequency-conversion-element configured to convert the supercontinuum-spectrum into a second frequency-domain, whereby the first supercontinuum-spectrum is converted to a second supercontinuum-spectrum.

This SC system differs from the SC system as proposed in the book chapter by Heidt et al., particularly by having the frequency-conversion element placed after the ANDi-fiber, rather than before the ANDi-fiber.

Using a frequency-conversion-element to for example converting an input wavelength of λ to half of that, λ/2, called frequency doubling or second harmonic generation (SHG), using a non-linear crystal, is well-known in the art.

Further, as described in US 5,867,305A, the conversion efficiency in a non-linear crystal is related to the optical power density of the light-pulses, the wavelength, and the polarization stability. Further, a single narrow wavelength band is preferred, since linewidth broadening and chirp reduce doubling efficiency.

For example, as is also known, the efficiency of SHG may be reduced by linewidth broadening in a crystal that is periodically poled. This may be because the poling period is linked directly to the phase velocity and/or absolutely frequency of the light. Accordingly, for low peak power input, a non-linear crystal may be poled to get "quasi phase matching". In such a crystal, the phase may be matched over a relatively long length of crystal to get enough light converted. For this reason, a frequency-conversion-element is typically, also also described by Heidt et al., placed before any kind of linewidth broadening element, in this case, the ANDi-fiber.

However, as just described, the presently disclosed ANDi-based SC system comprises a frequency-conversion-element that is placed after the ANDi-fiber, and therefore different from the system as proposed by Heidt et al, where a frequency-conversion-element is placed before after the ANDi-fiber.

According to the presently disclosed ANDi-based SC system, this implies that not only a single narrow wavelength band is converted to another single narrow wavelength band, but instead the first SC spectrum is converted to a second SC spectrum. In view of the above, it would be expected that the conversion efficiency for a system, as now disclosed, would be sub-optimal and not a preferred solution.

However, the inventors of the presently disclosed ANDi-based SC system have found that by placing the frequency-conversion-element after the ANDi-fiber, it is still possible to efficiently convert a SC spectrum rather than just a narrow wavelength band.

The inventors of the presently discloses ANDi-based SC system have realized that in an embodiment with high peak power input, a relatively long length of a frequency-conversion-element and poling may not be needed. In other words, in an embodiment with high peak power input, the inventors have realized that a relatively short frequency-conversion-element with no poling could be used.

When using a relatively short frequency-conversion-element with no poling, the inventors have found that the frequency-conversion-element could be so short that the phase velocity would have limited walk-off over a very wide range of frequencies. With this discovery, the inventors realized that it was possible to efficiently convert over a broad bandwidth.

As stated before, instead of converting a single wavelength to another single wavelength, the presently disclosed SC system converts multiple wavelengths (the first SC) to other multiple wavelengths (the second SC). This also has several advantages.

Firstly, if the second frequency-domain is in the UV-domain, then the first frequency-domain may not need to be in the UV-domain. In such an embodiment, light in the UV-domain, i.e. UV-light, may not need to be emitted into the ANDi-fiber. Accordingly, the ANDi-fiber, for example in the form of a solid core fiber, may not need to be exposed to UV-light, and therefore not be damaged. Secondly, if the second frequency-domain is in the IR-domain, then IR-light may be generated without the use of tapered or all-solid PCF designs.

The all-normal dispersion (ANDi)-fiber is per definition a fiber that has only normal dispersion in a specific wavelength-region, for example from 0.5 µm to 2.0 µm. This wavelength-region may be defined as the ANDi-wavelength range. Furthermore, for an ANDi-fiber, the dispersion is low and has flat and only normal dispersion over the entire bandwidth of interest. One definition of low and flat normal dispersion is for example when the dispersion is with an absolute value between 0 and 1500 ps/nm/km. Another definition of low and flat normal dispersion is for example when the dispersion is with an absolute value between 0 and 500 ps/nm/km. Yet another definition of low and flat normal dispersion may be when the dispersion is with an absolute value between 0 and 100 ps/nm/km, such as between 0 and 50 ps/nm/km.

When the first SC is generated in the ANDi-fiber, i.e. in the ANDi-wavelength range, the generated SC spectrum is called an ANDi-SC. To generate an ANDi-SC, it is known that the ANDi-fiber may have a length configured to initiate both self-phase modulation (SPM) and optical wave-breaking (OWB) in the ANDi-wavelength range. Furthermore, to generate an ANDi-SC, it is known that the ANDi-fiber further may have a length configured to develop the first SC spectrum, i.e. the ANDi SC, by the combined effect of SPM and OWB.

Further details are described in the following.

### Brief description of the drawings

The above and/or additional objects, features and advantages of the present disclosure, will be further described by the following illustrative and non-limiting detailed description of embodiments of the present disclosure, with reference to the appended drawing(s), wherein:

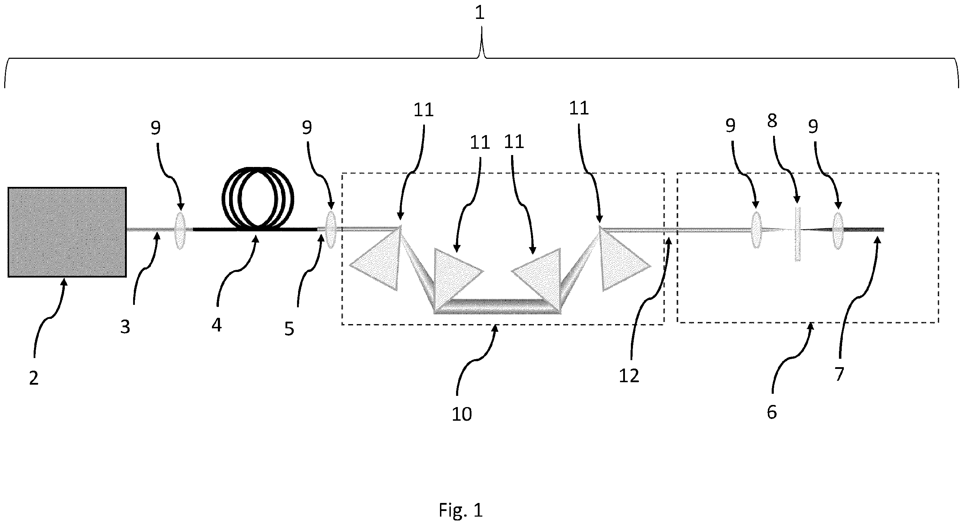

**Fig. 1** shows an example of an ANDi SC system according to the present disclosure.

### Detailed description

### Frequency-conversion-element

In one embodiment, at least a part of the second frequency-domain comprises frequencies that are higher than that of the first frequency-domain. This means that the wavelengths in the first SC have been converted to lower wavelengths in the second SC. For example, a first SC that has a bandwidth from 600 nm to 1000 nm may be down-converted in wavelengths to a second SC having a bandwidth from 300 to 500 nm, which is therefore defined in the UV-domain, starting from 400 nm. Accordingly, using such an approach as described here provides that the bandwidth may be halved, for example in this case from a bandwidth of 400 nm to 200 nm. In some embodiments, dependent on the efficiency of the frequency-conversion-element, i.e. dependent on the efficiency of the down-conversion, the bandwidth may be less than halved. In embodiments as described above, the frequency-conversion-element may be a second harmonic generator, for example a non-linear crystal. Examples of non-linear crystal include BBO or a poled LBGO. In some embodiments, the non-linear crystal is a non-poled crystal. In relation to using the frequency-conversion-element for second harmonic generation (SHG), using a non-linear crystal, the non-linear crystal may have a length (in which the interaction is defined) that is less than 5 mm, such as around or less than 3 mm. In preferred embodiments, the non-linear crystal may have a length that is less than 1 mm, preferably less than 500 microns, more preferably less than 300 microns, most preferably such as around 100 microns. Having an interaction length of less than 5 mm may provide that the phase velocity has limited walk-off over a very wide range of frequencies. In this embodiment, it is therefore possible to efficiently convert over a broad bandwidth, and therefore effectively provide an ANDi-SC, such as in the UV-domain. Having a short interaction length may in some embodiments imply that a relatively high peak power is also to be used. For example, peak powers of more than 50 kW may be used in combination with a non-linear crystal having a length of less than 5 mm. In such an example, the conversion efficiency may for example be around 20% or less. Although this is a relatively low conversion efficiency, it is to noted that this is the average efficiency for all wavelengths in the first supercontinuum, and therefore still very efficient to generate an ANDi-SC, such as in the UV-domain.

In another embodiment, at least a part of the second frequency-domain comprises frequencies that are lower than that of the first frequency-domain. This means that the wavelengths in the first SC have been converted to higher wavelengths in the second SC. For example, a first SC that has a bandwidth from 600 nm to 1000 nm may be up-converted in wavelengths to a second SC having a bandwidth from 1200 to 2000 nm, which is therefore defined in the IR-domain, starting from 760 nm. Accordingly, using such an approach as described here provides that the bandwidth may be doubled, for example in this case from a bandwidth of 400 nm to 800 nm.

In a preferred embodiment, the first supercontinuum spectrum has a bandwidth that is more than 200 nm, preferably more than 400 nm, more preferably of more than 500 nm, most preferably of more than 600 nm.

### Pulsed light source

The pulsed light-source-device, according to the present disclosure, is configured to generate a train of light-pulses. Such pulses may be defined to have a first center-wavelength, which may then broadened in the ANDi-fiber to generate the first supercontinuum spectrum. Further, each of the pulses may be defined in terms of at least a peak-power, P₀, and a pulse width, T₀. The pulse width is also called a pulse duration.

In one embodiment, the pulsed light source generates the train of light-pulses with pulses that are defined to have a pulse duration of less than 1 ps, such as less than 500 fs, such as around or less than 250 fs. In other embodiments, the pulse duration is more than 20 fs, such as more than 50 fs. In further embodiments, the pulse duration is between 20 fs and 500 fs, such as between 50 fs and 250 fs. The here described pulse durations have been found to be optimal for ANDi-SC generation in an ANDI-SC system according to the present disclosure.

In another embodiment, the train of light pulses is defined by a first center wavelength, wherein the first center wavelength is shorter than 1100 nm, such as around 1064 nm, such as around 1050 nm, such as around 800 nm.

In some embodiments, the pulsed light-source-device is a femto-second pulse source configured to generate the train of light-pulses being transmitted into the ANDi-fiber, wherein the ANDi-fiber is a solid core fiber, and wherein the train of light pulses comprises light-pulses that are defined to have a peak power of more than 50 kW, such as around or more than 100 kW, such as around or more than 1000 kW. Such peak powers in combination with a solid core fiber have been found to be optimal for ANDi-SC generation in an ANDI-SC system according to the present disclosure.

In other embodiments, the pulsed light-source-device is a femto-second pulse source configured to generate the train of light-pulses being transmitted into the ANDi-fiber, wherein the ANDi-fiber is a hollow core fiber, wherein the train of light pulses comprises light-pulses that are defined to have a peak power of more than 1 MW, such as around or more than 100 MW, such as around or more than 1000 MW. Such peak powers in combination with a hollow core fiber have been found to be optimal for ANDi-SC generation in an ANDI-SC system according to the present disclosure.

An ANDi-fiber, or a non-linear fiber in general, may be defined by at least a non-linear coefficient, γ, and a group-velocity dispersion, β₂.

With such definitions of the ANDi-fiber, a soliton number, N, can be defined for the pulsed-light source in combination with the ANDi-fiber. The soliton number for each of the pulses from the pulsed light-source-device in combination with the ANDi-fiber, is defined by a soliton number, N, where N² = T₀² γ P₀/|β₂|.

In most embodiments, each pulse in the train of light pulses is defined by a soliton number being between N=10 and N=1000.

In a preferred embodiment, the train of pulses is defined by a shot-to-shot noise that is less than 1 %, preferably less than 0.5%, more preferably less than 0.3%, most preferably less than 0.15%.

### All-normal-dispersion fiber

In one embodiment, the all-normal-dispersion fiber is a polarization maintaining fiber. This may avoid quantum noise amplification via incoherent polarization-dependent nonlinear processes.

In another embodiment, the all-normal-dispersion fiber is birefringent, defining a fast axis and a slow axis, and wherein the train of light pulses is guided primarily along the fast axis. This may exclude coupling between the fundamental polarization modes, and thus also prevent polarization-dependent nonlinear processes. The exclusion of coupling between the fundamental polarization modes may in some embodiments be fulfilled when the ANDi-fiber is a highly birefringent fiber, such as having a birefringence higher than 1.0·10⁻⁴. Furthermore, the polarization noise may be reduced (but not fully prevented) when the high energy component propagates along the fast axis (low index axis) of the fiber.

In most embodiments, the all-normal-dispersion fiber has an absolute dispersion between 0 ps/nm/km and 500 ps/nm/km from the wavelength ranging from 300 nm to 2000 nm. In the present disclosure, when referred to dispersion, this means the group velocity dispersion parameter, called D. Having such a dispersion, may generate high-quality SC spectra having a large spectral bandwidth.

In a preferred embodiment, the all-normal-dispersion fiber is a solid core fiber, wherein the core diameter of the solid core fiber is less than 10 microns, preferably less than 5 microns, such as less than 3 microns.

In another preferred embodiment, the all-normal-dispersion fiber is a hollow core fiber, wherein the core diameter of the hollow core fiber is less than 80 microns,. In most preferred embodiments, the core diameter of the hollow core fiber is ranging from 10 microns to 70 microns, more preferably from 10 microns to 50 microns, most preferably from 10 microns to 30 microns.

It may be advantageous to use a solid core fiber over a hollow core fiber because a solid core fiber may only need pulses laser light having peak powers in the kW regime, such as more than 50 kW, whereas a hollow core fiber may need much higher peak powers, such as more than 1 MW. In addition, to provide an ANDi-fiber in the form of a hollow core fiber, the hollow core fiber may need to be filled with a gas or liquid, even a pressurized gas. However, if these features are not seen as a difficult implementation, both solid core and a hollow core fiber may be suitable for generating ANDi-SC in the SC system as described in the present disclosure.

### ANDi-SC system

In a preferred embodiment, the pulsed light source, the all-normal-dispersion fiber, and the frequency-conversion element are configured together to convert at least a part of the second supercontinuum-spectrum into an ultraviolet wavelength domain, wherein the ultraviolet wavelength domain is defined to be with wavelengths of less than 400 nm. As previously described, providing an ANDi-SC in the UV-domain has been a desire in the community for a long time, and the inventors have now found an effective method to generate ANDi-SC in the UV-domain using the presently disclosed ANDi-SC system.

In another preferred embodiment, the supercontinuum system further comprises a compression stage configured to compress the train of pulses to pulses with a pulse duration of less than 100 fs, preferably of less than 50 fs, such as around 30 fs, and wherein the compression stage is located between the all-normal-dispersion fiber and the frequency-conversion element. It has been found that for high conversion efficiency, such pulses may be optimal.

### Example 1 - An example of an ANDi-SC system according to the present disclosure:

**Fig. 1** shows an example of an ANDi SC system **1** according to the present disclosure. The ANDi SC system **1** comprises a pulsed light-source **2** configured to generate a train of light-pulses **3**. Further, the ANDi-SC system comprises an all-normal-dispersion fiber **4** optically coupled to the pulsed light-source **2** and configured to generate a first supercontinuum **5**. The first supercontinuum is light composed of multiple wavelengths, thus forming a first supercontinuum spectrum from the train of light-pulses **3**. The supercontinuum-spectrum is defined in a first frequency-domain. The ANDi-SC system further comprises a frequency-conversion-element **6** configured to convert the supercontinuum-spectrum into a second frequency-domain, whereby the first supercontinuum-spectrum is converted to a second supercontinuum-spectrum, i.e. a second supercontinuum **7**.

The ANDi-fiber **4** is a solid core fiber having only normal dispersion between an absolute value of 0 ps/nm/km and 1500 ps/nm/km in an ANDi-wavelength range from at least 400 nm to 1000 nm. In this manner, the solid core fiber **4** is configured to generate the first SC **5** based on the only normal dispersion of the solid core fiber **4**.

The solid core fiber **4** has a length configured to initiate optical wave-breaking, whereby the SC spectrum **5** defines an ANDi SC spectrum.

The frequency-conversion-element **6** comprises a non-linear crystal **8** configured for frequency-doubling the first frequency-domain to the second frequency-domain by second harmonic generation.

As can further be seen from **Fig. 1**, there is an optical coupling between the pulsed light-source **2** and the non-linear crystal **8**. Further, there is an optical coupling between the non-linear-crystal **8** and the solid core fiber **4**. In this example, all the optical coupling is via a plurality of optical elements, in this case a plurality of optical lenses **9**. Finally, the non-linear crystal **8** is optically coupled to an optical lens **8** to transmit the ANDi-SC light **7**, i.e. the second SC, here in the form of collimated light.

Further, the ANDi-SC system **1** comprises a compression stage **10** configured to temporally compress the first ANDi SC spectrum **5** to another first ANDi-SC spectrum **12** having shorter pulses than the first ANDi-SC spectrum. In this example, the compression stage comprises a plurality of prisms **11**, forming a so-called prism-compressor **10**. The prism-compressor **10** is here used to shorten the pulses of the ANDi SC **5**, since short pulses may be used/required in specific applications and/or to efficiently convert the pulses in the non-linear crystal **8**.

In this example, the non-linear crystal **8** may for example be a non-poled BBO crystal with a length of less than 3 mm.

The train of light pulses **3** is defined by a first center wavelength, wherein the first center wavelength is around 800 nm. When this wavelength is used, the non-linear crystal **8** is cut at 29 degrees, whereby normal incidence of the second ANDi-SC **12** will convert 800 nm light efficiently to 400 nm. The 800 nm wavelength is the center of the wavelength range of the generated ANDi-SC **12**.

To provide the most efficient conversion of the ANDi-SC **12**, the crystal has a length of less 1 mm, such as around 100 microns, and the pulsed light source **2** and/or the compression stage **10** generates the train of light-pulses with pulses that are defined to have a pulse duration of less than 250 fs, such as less than 200 fs. Such short pulses are typically accompanied by high peak powers, such as more than 50 kW. Using such pulse durations and peak powers maximize the bandwidth of the second ANDi-SC. This is because the short crystal length avoids walk-off due to high peak powers.

## Claims

1. An all-normal-dispersion based supercontinuum system, comprising:
- a pulsed light-source configured to generate a train of light-pulses;
- an all-normal-dispersion fiber optically coupled to the pulsed light-source and configured to generate a first supercontinuum-spectrum from the train of light-pulses, wherein the supercontinuum-spectrum is defined in a first frequency-domain; and
- a frequency-conversion-element configured to convert the supercontinuum-spectrum into a second frequency-domain, whereby the first supercontinuum-spectrum is converted to a second supercontinuum-spectrum.

2. The supercontinuum system according to claim 1, wherein at least a part of the second frequency-domain comprises frequencies that are higher than that of the first frequency-domain.

3. The supercontinuum system according to claim 1, wherein at least a part of the second frequency-domain comprises frequencies that are lower than that of the first frequency-domain.

4. The supercontinuum system according to any of the preceding claims, wherein the pulsed light source generates the train of light-pulses with pulses that are defined to have a pulse duration of less than 1 ps, such as less than 500 fs, such as around or less than 250 fs.

5. The supercontinuum system according to any of the preceding claims, wherein the train of light pulses is defined by a first center wavelength, wherein the first center wavelength is shorter than 1100 nm, such as around 1064 nm, such as around 1050 nm, such as around 800 nm.

6. The supercontinuum system according to any of the preceding claims, wherein the all-normal-dispersion fiber has an absolute dispersion between 0 ps/nm/km and 500 ps/nm/km from the wavelength ranging from 300 nm to 2000 nm.

7. The supercontinuum system according to any of the preceding claims, wherein the all-normal-dispersion fiber is a solid core fiber, wherein the core diameter of the solid core fiber is less than 10 microns, preferably less than 5 microns, such as less than 3 microns.

8. The supercontinuum system according to any of the preceding claims, wherein the all-normal-dispersion fiber is a hollow core fiber, wherein the core diameter of the hollow core fiber is less than 80 microns.

9. The supercontinuum system according to any of the preceding claims, wherein the first supercontinuum spectrum has a bandwidth that is more than 200 nm, preferably more than 400 nm, more preferably more than 500 nm, most preferably more than 600 nm.

10. The supercontinuum system according to any of the preceding claims, wherein the frequency-conversion-element is a second harmonic generator.

11. The supercontinuum system according to claim 10, where the second harmonic generator comprises a non-linear crystal.

12. The supercontinuum system according to claim 11, wherein the non-linear crystal has a length that is less than 5 mm, such as around or less than 3 mm.

13. The supercontinuum system according to claim 7, wherein the pulsed light-source-device is a femto-second pulse source configured to generate the train of light-pulses being transmitted into the solid core fiber, wherein the train of light pulses comprises light-pulses that are defined to have a peak power of more than 50 kW, such as around or more than 100 kW, such as around or more than 1000 kW.

14. The supercontinuum system according to claim 8, wherein the pulsed light-source-device is a femto-second pulse source configured to generate the train of light-pulses being transmitted into the hollow core fiber, wherein the train of light pulses comprises light-pulses that are defined to have a peak power of more than 1 MW, such as around or more than 100 MW, such as around or more than 1000 MW.

15. The supercontinuum system according to any of the preceding claims, wherein the pulsed light source, the all-normal-dispersion fiber, and the frequency-conversion element are configured together to convert at least a part of the second supercontinuum-spectrum into an ultraviolet wavelength domain, wherein the ultraviolet wavelength domain is defined to be with wavelengths of less than 400 nm.

16. The supercontinuum system according to any of the preceding claims, wherein the supercontinuum system further comprises a compression stage configured to compress the train of pulses to pulses with a pulse duration of less than 100 fs, preferably of less than 50 fs, such as around 30 fs, and wherein the compression stage is located between the all-normal-dispersion fiber and the frequency-conversion element.
